# EUROPÄISCHE PATENTSCHRIFT

(11) **EP 4 372 280 B1**
(45) Veröffentlichungstag und Bekanntmachung des Hinweises auf die Patenterteilung: **27.08.2025**
(21) Anmeldenummer: 23209867.3
(22) Anmeldetag: 14.11.2023
(51) Int. Cl.: F23K 5/00, C01B 3/00

(54) **BRENNGAS UND VERFAHREN ZUR AUTOGENEN BEARBEITUNG VON METALLEN**
COMBUSTIBLE GAS AND PROCESS FOR THE AUTOGENOUS TREATMENT OF METALS
GAZ COMBUSTIBLE ET PROCÉDÉ DE TRAITEMENT AUTOGÈNE DE MÉTAUX

(30) Priorität: 15.11.2022 DE 102022130247
(43) Veröffentlichungstag der Anmeldung: 22.05.2024
(73) Patentinhaber: Messer SE & Co. KGaA, 65812 Bad Soden am Taunus (DE)
(72) Erfinder: Hildebrandt, Dr. Bernd, 47918 Tönisvorst (DE)
(74) Vertreter: Münzel, Joachim R.

(56) Entgegenhaltungen:
- EP-A2- 0 952 232
- CA-A1- 3 165 030
- GB-A- 901 580

## Beschreibung

Die Erfindung betrifft ein Verfahren zur autogenen Bearbeitung metallischer Werkstücke unter Verwendung eines Brenngases.

Zum autogenen Bearbeitung, wie beispielsweise Brennschneiden, Flammrichten, Fugenhobeln oder Autogenschweißen kommen heute überwiegend auf Kohlenwasserstoffen basierende Brenngase wie Propan, Acetylen, Propen, Ethen usw. zum Einsatz, wie beispielsweise in der DE 2 823 305 A1 beschrieben. Auf Grund der bei der Verbrennung dieser Gase entstehenden Kohlendioxidemission werden in naher Zukunft durch bereits jetzt in Vorbereitung befindliche Gesetzesregelungen genau diese Brenngase und Brenngasgemische mit einer CO₂ - Steuer belegt werden. Unabhängig vom Kostenaspekt hat die Vermeidung von klimaschädlichem Kohlendioxid sowie andern Emissionen, wie beispielsweise Kohlenmonoxid oder Mikro-Partikel (Kohlenstoff), die als Reaktionsprodukte der Verbrennung entstehen, einen hohen Stellenwert zur Erhöhung der Arbeitssicherheit und des Umweltschutzes.

An Stelle kohlenstoffbasierter Brenngase bietet sich der schon seit über 100 Jahren auch als Brenngas in der Autogentechnik bekannte Wasserstoff als Alternative an. Wasserstoff wird als Brenngas in reiner Form oder als Gemisch mit anderen Gaskomponenten eingesetzt.

In der EP 0 952 205 A1 wird ein insbesondere zum Brennschneiden einsetzbares Brenngas vorgestellt, das aus Acetylen und einer weiteren Komponente besteht, bei der es sich entweder um Wasserstoff oder um Erdgas handelt. Das Verhältnis aus Acetylen und der anderen Komponente beträgt dabei zwischen 1:99 und 29,8:70,2.

In der EP 0 952 232 A2 wird ein Verfahren zur thermischen Bearbeitung von metallischen Werkstücken unter Einsatzes eines Gasgemischs beschrieben, das aus einem aus Kohlenwasserstoff oder Wasserstoff bestehenden Brenngas, einem aus Phosphan, Silan, Ammoniak oder Schwefelwasserstoff bestehenden Additiv sowie einem Inertgas, wie Stickstoff, zusammengesetzt ist.

Ohne Bezug zu Brenngasen werden in der GB 901 580 A und der CA 3 165 030 A1 Gasgemische beschreiben, die neben der Hauptkomponente Wasserstoff unbrennbare Bestandteile, wie Stickstoff oder Argon, enthalten.

In der DE 10 2010 030 907 A1 wird vorgeschlagen, einem bei einem Autogenverfahren eingesetzten, Wasserstoff enthaltendem Gasgemisch Helium beizumischen, um die Wärmeübertragung von der Flamme auf das Werkstück zu verbessern.

Nachteilig bei der Verwendung von Wasserstoff als Brenngas ist jedoch, dass das Gas aufgrund seiner geringen Dichte und des geringen Durchmessers seiner Moleküle leicht durch kleinste Spalte, Poren, Öffnungen u. dergleichen an Dichtungen entweichen oder im Wege von Diffusion oder Effusion durch Schlauchleitungen hindurchdringen kann. Dies stellt insbesondere in der Autogentechnik ein großes Problem dar, weil dort häufig, insbesondere bei automatisierten Anlagen, eine Vielzahl an Verbindungselementen, beweglichen Abdichtungen und Schläuchen mit vergleichsweise geringem Durchmesser zum Einsatz kommen, die jeweils eine Quelle für derartige Undichtigkeiten für Wasserstoff darstellen können. In der Folge besteht die Gefahr, dass sich Wasserstoff im Umgebungsbereich bis zur Zündgrenze anreichert und dadurch ein hohes Gefahrenpotenzial für Bediener und Gerät darstellt.

Aufgabe der vorliegenden Erfindung ist es daher, Verfahren zur autogenen Bearbeitung metallischer Werkstücke anzugeben, das die vorgenannten Nachteile überwindet.

Gelöst wird diese Aufgabe mit einem Verfahren nach Patentanspruch 1. Vorteilhafte Ausgestaltungen der Erfindung werden in den Unteransprüchen beansprucht.

Das im erfindungsgemäßen Verfahren eingesetzte Brenngas besteht also aus einem Anteil von zwischen 99,5 Vol.-% und 90 Vol.-% aus Wasserstoff und im Übrigen aus einem Zusatzgas, das zumindest eine unbrennbare Gaskomponente aufweist. Der Anteil der unbrennbaren Komponente bzw. der Anteil der Gesamtheit der unbrennbaren Gaskomponenten am Brenngas beträgt dabei zumindest 0,5 Vol.-%, bevorzugt mindestens 1 Vol.-% und höchstens 10 Vol.-%, bevorzugt höchstens 5 Vol.-%.

Als "Wasserstoff" soll hier ein Gas mit einem Wasserstoffanteil von mindestens 99,5 Vol.-%, bevorzugt von mindestens 99,99 Vol.-% verstanden werden.

Als "unbrennbare Gaskomponente" soll hier ein Gas verstanden werden, das mit Sauerstoff nicht oder nur unter Bedingungen reagiert, wie sie in technischen Verbrennungsvorgängen üblicherweise nicht auftreten, wie beispielsweise ein Edelgas, Stickstoff oder Kohlendioxid.

Überraschend hat sich herausgestellt, dass die Neigung des Wasserstoffs, durch Spalte, Poren etc. an Verbindungselementen einer brennstoffführenden Leitung zu entweichen oder durch Diffusion oder Effusion durch Leitungselemente hindurch zu dringen bei Verwendung des erfindungsgemäßen Brenngases deutlich reduziert ist. Gleichzeitig beeinträchtigen Beimengung unbrennbarer Gaskomponenten mit einem Anteil von weniger als 10 Vol.-% die Brenneigenschaft des Brenngases in den meisten Fällen nur unwesentlich. Zudem erleichtert die Unbrennbarkeit dieser Gaskomponenten die Lagerung des Zusatzgases und seine Vermischung mit dem Wasserstoff, da hierzu keine besonderen Sicherheitsanforderungen erforderlich sind.

Durch die Beimischung des Zusatzgases wird die Dichte des Brenngases erhöht. Ohne die Erfindung hierauf zu beschränken, wird eine mögliche Erklärung für die geringere Neigung des Wasserstoffs, durch Spalte oder Poren in Dichtungen und Leitungsabschnitten bzw. im Wege der Diffusion oder Effusion durch Begrenzungswände hindurch zu entweichen, darin gesehen, dass sich Moleküle bzw. Atome der unbrennbaren Gaskomponente/n während des Transports des Brenngases mit ihrem gegenüber Wasserstoffmolekülen größeren Durchmesser an vorhandene Spalten oder Poren der Verbindungselemente oder wasserstoffpermeable Öffnungen in Rohr- oder Schlauchleitungswänden anlagern und auf diese Weise den Durchtritt des Wasserstoffs durch diese erschweren oder gar verhindern.

Bevorzugt enthält das im erfindungsgemäßen Verfahren eingesetzte Brenngas als unbrennbare Gaskomponente ein Edelgas wie Argon, Stickstoff oder Kohlendioxid. Das Brenngas kann auch mehrere unbrennbare Gaskomponenten enthalten, beispielsweise ein Argon und/oder Stickstoff und/oder Kohlendioxid. Ein schwereres Edelgas als Argon ist ebenfalls einsetzbar; Helium ist mit seinem vergleichsweise geringen Atomdurchmesser dagegen weniger geeignet, das Zusatzgas ist also bevorzugt heliumfrei.

Besonders bevorzugt beträgt der Anteil der unbrennbaren Gaskomponente/n zwischen 1 Vol.-% und 5 Vol.-%.

In einer vorteilhaften Ausgestaltung der Erfindung enthält das Zusatzgas zusätzlich zu den vorgenannten unbrennbaren Komponenten wenigstens eine leicht brennbare Komponente wie Acetylen, Erdgas oder ein anderes kohlenwasserstoffhaltiges Gas oder mehrere dieser Komponenten. Durch Beimischen derartiger leicht brennbarer Komponenten können bestimmte Eigenschaften der Wasserstoffverbrennung positiv beeinflusst werden, wie beispielsweise die Flammenfärbung oder die Flammentemperatur. Der Anteil der Anteil der leicht brennbaren Komponente(n) am Brenngas beträgt bevorzugt zwischen 0,25 Vol.-% bis 9,5 Vol.-%, bevorzugt 0,5 Vol.-% bis 5 Vol.-%.

Beispielsweise besteht das im erfindungsgemäßen Verfahren eingesetzte Brenngas aus einem Anteil von 1 Vol.% bis 5 Vol.-% eines Zusatzgases bestehend aus Argon, Stickstoff, Kohlendioxid oder einem Gemisch aus zwei oder mehr dieser unbrennbaren Gaskomponenten, Rest Wasserstoff; aus einem Anteil zwischen 5 Vol.-% und 10 Vol.-% eines Zusatzgases bestehend aus Argon, Stickstoff, Kohlendioxid oder einem Gemisch aus zwei der mehr dieser unbrennbaren Gaskomponenten, Rest Wasserstoff; aus einem Anteil von 1 Vol.-% bis 10 Vol.-% eines Zusatzgases, bestehend aus einem Anteil von 0,5 Vol.% bis unter 10 Vol.-% wenigstens einer unbrennbaren Gaskomponente wie Argon, Stickstoff, Kohlendioxid oder einem Gemisch aus zwei oder mehr dieser Komponenten und einem Anteil von über 0 Vol.-% bis 9,5 Vol.-% einer leicht brennbaren Gaskomponente wie Acetylen oder Erdgas, Rest Wasserstoff; einem Anteil von 1 Vol.-% bis 10 Vol.-% eines Zusatzgases, bestehend aus einem Anteil von 1 Vol.% bis 5 Vol.-% wenigstens einer unbrennbaren Gaskomponente wie Edelgas, Stickstoff, Kohlendioxid oder einem Gemisch aus zwei oder mehr dieser Komponenten und einem Anteil von 1 Vol.-% bis 5 Vol.-% einer leicht brennbaren Gaskomponente wie Acetylen oder Erdgas, Rest Wasserstoff; aus einem Anteil von 1 Vol.-% bis 10 Vol.-% eines Zusatzgases, bestehend aus einem Anteil von 5 Vol.% bis unter 10 Vol.-% wenigstens einer unbrennbaren Gaskomponente wie Edelgas, Stickstoff, Kohlendioxid oder einem Gemisch aus zwei oder mehr dieser Komponenten und einem Anteil von über 0 Vol.-% bis unter 5 Vol.-% einer leicht brennbaren Gaskomponente wie Acetylen oder Erdgas, Rest Wasserstoff.

Das Brenngas wird erfindungsgemäß bei der autogenen Bearbeitung von Metallen mit einem sauerstoffhaltigen Oxidationsmittel verbrannt, bevorzugt Luft oder ein Gas mit einem Sauerstoffanteil größer als dem von Luft. Besonders bevorzugt weist das Oxidationsmittel einen Sauerstoffanteil von über 99 Vol.-%, besonders bevorzugt einen Sauerstoffanteil von über 99,9 Vol.-% auf.

Beim erfindungsgemäßen Verfahren wird ein Brenngas über eine Brenngaszuleitung herangeführt und an einem Bearbeitungswerkzeug mit einem über eine Oxidationsmittelzuleitung herangeführtem Oxidationsmittel zusammengeführt und miteinander zur Reaktion gebracht, wobei vor einer Mündungsöffnung des Bearbeitungswerkzeugs eine zur autogenen Bearbeitung eines Werkstücks eingesetzte Flamme erzeugt wird.

Als Brenngas kommt dabei ein Gasgemisch zum Einsatz, bestehend aus 90 Vol.-% bis 99,5 Vol.-% aus Wasserstoff sowie einem Zusatzgas besteht, dass einen mit einem Anteil von 0,5 Vol.-% bis 10 Vol.-% eine oder mehrere unbrennbare Gaskomponenten, wie Argon, Stickstoff oder Kohlendioxid aufweist, oder ein anders der oben beschriebenen Zusatzgase.

Als Bearbeitungswerkzeug findet erfindungsgemäß ein übliches Werkzeug für die autogene Bearbeitung Verwendung, beispielsweise eine Autogen-Brennschneidmaschine, eine Einrichtung zum Flammspritzen, eine Einrichtung zum Fugenhobeln oder ein Autogen-Schweißgerät. Das erfindungsgemäße Verfahren eignet sich somit insbesondere für alle eingangs genannten autogenen Bearbeitungsverfahren. Die Brenngaszuleitung steht mit einer Brenngasquelle in Strömungsverbindung, bei der es sich insbesondere um eine zur autogenen Bearbeitung übliche Brenngasquelle handelt, wie beispielsweise eine Druckgasflasche, ein Druckgasflaschenbündel oder ein Standtank. Als Oxidationsmittelquelle kommt insbesondere eine zur autogenen Bearbeitung übliche Oxidationsmittelquelle zum Einsatz, beispielsweise ebenfalls eine Druckgasflasche, ein Druckgasflaschenbündel oder ein Tank.

Die Eignung des zuvor beschriebenen Brenngases für die autogene Bearbeitung von insbesondere metallischen Werkstücken ergibt sich insbesondere daraus, dass die Reinheitsanforderungen an Brenngase für Autogenzwecke nicht vergleichbar sind mit den Anforderungen, wie sie auf anderen Gebieten der Technik existieren, etwa bei der Brennstoffzellentechnologie. Die für die autogene Bearbeitung wichtigen Parameter, wie beispielsweise die Flammentemperatur, Zündgeschwindigkeit oder Flammenleistung werden durch die unbrennbaren Gaskomponente(n) mit einem Anteil von bis zu 10 Vol.-% nicht oder nur unwesentlich beeinflusst.

In einer zweckmäßigen und besonders einfachen Ausgestaltung der Erfindung liegt das für das erfindungsgemäße Verfahren eingesetzte Brenngas bereits vor Beginn der autogenen Bearbeitung als fertiges Gasgemisch in der Brenngasquelle vor. Allerdings muss in diesem Fall darauf geachtet werden, dass bei längeren Lagerdauern keine Entmischungsprozesse in der Brenngasquelle eintreten, durch die die Zusammensetzung des entnommenen Brenngases wesentlich verändert wird.

Eine vorteilhafte Alternative zu dieser Ausgestaltung sieht vor, dass das Zusatzgas, oder einzelne Komponenten davon, vom Wasserstoff getrennt gelagert und diesem erst während der Bearbeitung, also beim Beginn des Transports des Wasserstoffs zum Bearbeitungswerkzeug, zugemischt wird. Bei dieser Variante wird insbesondere gewährleistet, dass die gegenüber reinem Wasserstoff reduzierte Fließfähigkeit des Brennstoffs nicht durch Entmischungsprozesse in der Brenngasquelle beeinträchtigt wird.. Beispielsweise erfolgt die Zuführung des Zusatzgases an einer geeigneten in der Zuleitung angeordneten Mischarmatur möglichst unmittelbar stromab zu einem Absperrventil eines als Brenngasquelle eingesetzten, mit Wasserstoff gefüllten Flaschengebindes oder Tanks. Insbesondere unbrennbare Zusatzgaskomponenten lassen sich so ohne besondere Sicherheitsanforderungen dem Brenngas zumischen.

Diese Alternative bietet zudem den Vorteil, dass die Zusammensetzung des dem Bearbeitungswerkzeug zugeführten Brenngases vor oder während der Bearbeitung eines Werkstücks entsprechend den jeweiligen Anforderungen verändert oder nach einem vorgegebenen Programm und/oder in Abhängigkeit von gemessenen Parametern geregelt werden kann.

Das erfindungsgemäße Verfahren ist für alle bekannten autogenen Bearbeitungsverfahren metallischer Werkstücke geeignet, beispielsweise zum Autogenschweißen, Brennschneiden, Flammrichten oder Fugenhobeln. Darüber hinaus können alle üblicherweise mit Autogentechnik bearbeitbare Werkstoffe bearbeitet werden, insbesondere unlegierten oder niedrig legierte Stähle, Kupfer oder Kupferverbindungen oder Aluminiumwerkstoffe. Insbesondere eignet sich das erfindungsgemäße Verfahren für das Brennschneiden von unlegierten oder niedrig legierten Stählen, insbesondere von solchen mit einer Blechdicke von über 10 mm.

## Patentansprüche

1. Verfahren nach zur autogenen Bearbeitung metallischer Werkstücke, bei dem über eine Brenngaszuleitung herangeführtes Brenngas mit einem über eine Oxidationsmittelzuleitung herangeführtem Oxidationsmittel an einem Bearbeitungswerkzeug zusammengeführt und miteinander zur Reaktion gebracht werden, wobei vor einer Mündungsöffnung des Bearbeitungswerkzeugs eine zur autogenen Bearbeitung eines Werkstücks eingesetzte Flamme erzeugt wird,
wobei als Brenngas ein Gasgemisch zum Einsatz kommt, bestehend aus mindestens 90 Vol.-% Wasserstoff und einem Zusatzgas, das wenigstens eine unbrennbare Gaskomponente enthält, wobei die unbrennbare Gaskomponente oder die unbrennbaren Gaskomponenten einen Anteil von 0,5 Vol.-% bis 10 Vol.-% aufweisen.

2. Verfahren nach Anspruch 1, wobei als wenigstens eine unbrennbare Gaskomponente des Zusatzgases Argon, Stickstoff oder Kohlendioxid zum Einsatz kommt.

3. Verfahren nach Anspruch 1 oder 2, wobei der Anteil der unbrennbaren Gaskomponente oder der unbrennbaren Gaskomponenten am Brenngas zwischen 1 Vol.-% und 5 Vol.-% beträgt.

4. Verfahren nach einem der vorhergehenden Ansprüche, wobei das Zusatzgas wenigstens eine leicht brennbare Gaskomponente wie Acetylen, Erdgas oder ein anderes kohlenwasserstoffhaltiges Gas enthält.

5. Verfahren nach Anspruch 4, wobei der Anteil der leicht brennbaren Gaskomponente oder der leicht brennbaren Gaskomponenten am Brenngas zwischen 0,25 Vol.-% bis 9,5 Vol.-%, bevorzugt 0,5 Vol.-% bis 5 Vol.-% beträgt.

6. Verfahren nach einem der vorhergehenden Ansprüche, wobei die autogene Bearbeitung des Werkstücks in Schweißen, Brennschneiden, Flammrichten oder Fugenhobeln besteht.

7. Verfahren nach einem der vorhergehenden Ansprüche, wobei das Brenngas vor oder während der autogenen Bearbeitung vor Ort durch Vermischen von Wasserstoff und Zusatzgas hergestellt wird.

8. Verfahren nach Anspruch 7, wobei die Zusammensetzung des Brenngases nach einem vorgegebenen Programm und/oder in Abhängigkeit gemessener Parameter verändert wird.

## Claims

1. Process for the autogenous processing of metallic workpieces, in which a fuel gas supplied via a fuel gas supply line and an oxidant supplied via an oxidant feed line are combined at a processing tool and reacted with one another to generate a flame used for autogenous processing of a workpiece in front of an aperture opening of the processing tool,
wherein the fuel gas used is a gas mixture consisting of at least 90% by volume of hydrogen and an additive gas containing at least one incombustible gas component, wherein the incombustible gas component(s) has/have a proportion of 0.5% by volume to 10% by volume.

2. Process according to Claim 1, wherein argon, nitrogen or carbon dioxide is used as at least one incombustible gas component of the additive gas.

3. Process according to Claim 1 or 2, wherein the proportion of the incombustible gas component(s) in the fuel gas is between 1% by volume and 5% by volume.

4. Process according to any one of the preceding claims, wherein the additive gas comprises at least one readily combustible gas component such as acetylene, natural gas or another hydrocarbon-containing gas.

5. Process according to Claim 4, wherein the proportion of the readily combustible gas component(s) in the fuel gas is between 0.25% by volume to 9.5% by volume, preferably 0.5% by volume to 5% by volume.

6. Process according to any of the preceding claims, wherein the autogenous processing of the workpiece consists of welding, flame cutting, flame straightening or gouging.

7. Process according to any of the preceding claims, wherein the fuel gas is produced on site by mixing of hydrogen and additive gas before or during the autogenous processing.

8. Process according to Claim 7, wherein the composition of the fuel gas is altered according to a defined program and/or depending on measured parameters.

## Revendications

1. Procédé de traitement autogène de pièces métalliques, dans lequel du gaz de combustion amené par l'intermédiaire d'une conduite d'alimentation en gaz de combustion et un oxydant amené par l'intermédiaire d'une conduite d'alimentation en oxydant sont réunis et mis en réaction l'un avec l'autre au niveau d'un outil de traitement, une flamme utilisée pour le traitement autogène d'une pièce étant générée devant un orifice de sortie de l'outil de traitement,
un mélange gazeux, constitué par au moins 90% en volume d'hydrogène et par un gaz additionnel, qui contient au moins un composant gazeux ininflammable, étant utilisé comme gaz combustible, le composant gazeux ininflammable ou les composants gazeux ininflammables représentant une proportion de 0,5% en volume à 10% en volume.

2. Procédé selon la revendication 1, de l'argon, de l'azote ou du dioxyde de carbone étant utilisé comme au moins un composant gazeux ininflammable du gaz additionnel.

3. Procédé selon la revendication 1 ou 2, la proportion du composant gazeux ininflammable ou des composants gazeux ininflammables par rapport au gaz combustile représentant entre 1% en volume et 5% en volume.

4. Procédé selon l'une des revendications précédentes, le gaz additionnel contenant au moins un composant gazeux facilement inflammable, tel que l'acétylène, le gaz naturel ou un autre gaz contenant des hydrocarbures.

5. Procédé selon la revendication 4, la proportion du composant gazeux facilement inflammable ou des composants gazeux facilement inflammables par rapport au gaz combustible représentant entre 0,25% en volume à 9,5% en volume, de préférence 0,5% en volume à 5% en volume.

6. Procédé selon l'une des revendications précédentes, le traitement autogène de la pièce étant constitué par un soudage, un oxycoupage, un dressage à la flamme ou un gougeage.

7. Procédé selon l'une des revendications précédentes, le gaz combustible étant préparé avant ou pendant le traitement autogène sur place par mélange d'hydrogène et de gaz additionnel.

8. Procédé selon la revendication 7, la composition du gaz combustible étant modifiée selon un programme prédéfini et/ou en fonction de paramètres mesurés.
